Europäisches Patentamt

European Patent Office

Office européen des brevets

(11) Veröffentlichungsnummer: **0 481 105 A1**

# (12) EUROPÄISCHE PATENTANMELDUNG

(21) Anmeldenummer: **90119746.7**

(22) Anmeldetag: **15.10.90**

(51) Int. Cl.5: **G01K 3/00**, G01K 7/00

(43) Veröffentlichungstag der Anmeldung:
**22.04.92 Patentblatt 92/17**

(84) Benannte Vertragsstaaten:
**AT BE CH DE DK ES FR GR IT LI LU NL SE**

(71) Anmelder: **SIEMENS AKTIENGESELLSCHAFT**
**Wittelsbacherplatz 2**
**W-8000 München 2(DE)**

(72) Erfinder: **Leipold, Ludwig, Dipl.-Ing.**
**Strassberger Strasse 125**
**W-8000 München 40(DE)**
Erfinder: **Sander, Rainald, Dipl.-Phys.**
**Karl-Theodor-Strasse 25**
**W-8000 München 40(DE)**
Erfinder: **Tihanyi, Jenö, Dr.Ing.**
**Hartelstrasse 6**
**W-8000 München 21(DE)**

(54) **Schaltungsanordnung zum Erfassen der Übertemperatur eines elektronischen Bauelements.**

(57) Es wird in bekannter Weise die Temperaturabhängigkeit des Sperrstroms eines Bipolartransistors (1) ausgenutzt. Wird dieser größer als der Strom einer in Reihe geschalteten Stromquelle (2), steigt die Spannung an der Stromquelle steil an. Die Schaltung erhält erfindungsgemäß dadurch ein Hystereseverhalten, daß zwischen Emitter und Basis ein steuerbarer Widerstand (5) eingeschaltet wird. Dessen Widerstandswert ist bei niedriger an der Stromquelle liegender Spannung niedrig, bei hoher Spannung größer.

FIG 1

Die Erfindung bezieht sich auf eine Schaltungsanordnung zum Signalisieren der Übertemperatur eines elektronischen Bauelements, mit einem mit dem Bauelement in thermischem Kontakt stehenden Bipolartransistor, dem emitterseitig eine Stromquelle in Reihe geschaltet ist, mit einer mit dem Knoten zwischen Spannungsquelle und Emitter des Bipolartransistors verbundenen Ausgangsklemme, an der eine erste Ausgangsspannung Normaltemperatur und eine zweite Ausgangsspannung Übertemperatur signalisiert.

Eine Schaltungsanordnung dieser Gattung ist bereits in der europäischen Patentanmeldung 0 240 807 beschrieben worden. Sie nutzt die Temperaturabhängigkeit des Sperrstroms des Bipolartransistors aus. Der Bipolartransistors und die Stromquelle werden einerseits derart dimensioniert, daß der Sperrstrom des Bipolartransistors bei Normaltemperatur des zu überwachenden Bauelements, z. B. eines Leistungshalbleiter-Bauelements, geringer ist als der Strom der Stromquelle. Andererseits sind Bipolartransistor und Stromquelle derart aufeinander abgestimmt, daß der Sperrstrom des Bipolartransistors bei Übertemperatur des elektronischen Bauelements größer ist als der Strom der Stromquelle. Der Übergang von Normaltemperatur zur Übertemperatur macht sich am Knoten zwischen Bipolartransistor und Stromquelle durch einen Spannungssprung bemerkbar, der als Übertemperatursignal detektiert werden kann.

Für manche Anwendungszwecke ist ein Hysteresesverhalten der beschriebenen Schaltungsanordnung erwünscht derart, daß bei Temperaturanstieg das Übertemperatur anzeigende Signal bei einer ersten vorgegebenen Temperatur auftritt und daß dieses Signal bei Temperaturrückgang bei einer zweiten vorgegebenen niedrigeren Temperatur wieder verschwindet.

Ziel der Erfindung ist, die Schaltungsanordnung der eingangs beschriebenen Gattung derart weiterzubilden, daß sie ein Hysteresesverhalten aufweist.

Dies wird erreicht durch einen zwischen Basis und Emitter liegenden einstellbaren Widerstand, dessen Widerstandswert von der Ausgangsspannung gesteuert wird derart, daß er bei der ersten Ausgangsspannung einen ersten vorgegebenen Wert und bei der zweiten Ausgangsspannung einen zweiten, höheren Wert hat.

Weiterbildungen der Erfindung sind Gegenstand der Unteransprüche.

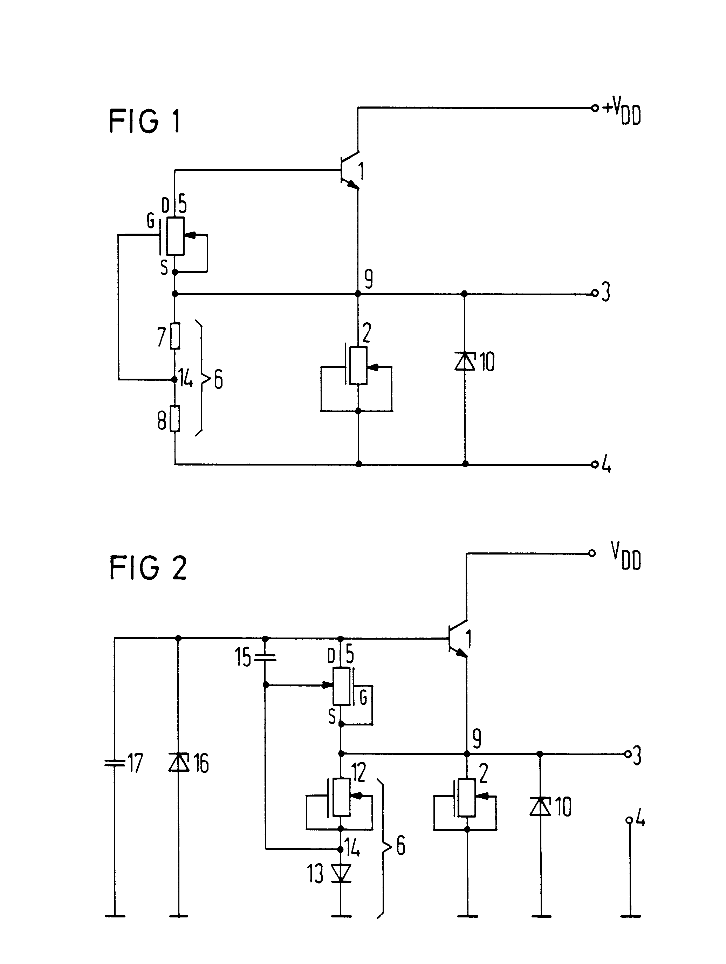

Die Erfindung wird anhand zweier Ausführungsbeispiele in Verbindung mit den FIG 1 und 2 näher erläutert.

Die Schaltungsanordnung nach FIG 1 hat einen Bipolartransistor 1, dem eine Stromquelle 2 in Reihe geschaltet ist. Die Reihenschaltung liegt an einer Betriebsspannung $V_{DD}$. Der Knoten 9 zwischen Bipolartransistor 1 und Stromquelle 2 ist mit einer Ausgangsklemme 3 verbunden. Der nicht mit dem Knoten 9 verbundene Anschluß der Stromquelle 2 ist mit einer Ausgangsklemme 4 verbunden.

Zwischen der Basis des Bipolartransistors 1 und seinen Emitter ist ein einstellbarer Widerstand geschaltet. Dieser besteht im Ausführungsbeispiel mit der eingezeichneten Polarität der Betriebsspannung aus einem n-Kanal-Depletion-FET 5. Sein Drainanschluß ist mit dem Basisanschluß des Bipolartransistors 1 verbunden, sein Sourceanschluß mit dessen Emitter. Der Gateanschluß ist mit einem Knoten 14 eines Spannungsteilers 6 verbunden, der zwischen den Ausgangsklemmen 3 und 4 liegt. Im Ausführungsbeispiel besteht der Spannungsteiler 6 aus zwei Widerständen 7 und 8.

Liegt bei Normaltemperatur der Sperrstrom des Bipolartransistors 1 unter dem Strom der Stromquelle 2, so hat diese einen sehr geringen Widerstand und das Potential am Knoten 9 liegt bei etwa Massepotential, d. h. bei null Volt. Damit ist auch die Gate-Sourcespannung des FET 5 etwa null Volt und dieser leitet. Das bedeutet, daß ein Teil des Sperrstroms des Bipolartransistors 1 abgeleitet wird und der Emitterstrom des Bipolartransistors entsprechend verringert wird. D. h., daß diejenige Temperatur, bei der an den Ausgangsklemmen 3, 4 ein Übertemperatur anzeigendes Signal auftritt, zu höheren Temperaturwerten hin verschoben wird.

Steigt die Temperatur weiter und erreicht der Sperrstrom des Bipolartransistors den Strom der Stromquelle 2, so steigt die Spannung an den Ausgangsklemmen 3, 4 steil an. Ihre Höhe wird durch eine Zenerdiode 10 begrenzt. Damit steigt auch die Spannung am Spannungsteiler 6 und am Sourceanschluß des FET 5. Gegenüber dem Sourcepotential stellt sich am Gate des FET 5 eine niedrigere Spannung ein und dieser wird in einen Bereich hohen Widerstands geschaltet. Geht nun die Temperatur zurück, so unterschreitet der Sperrstrom des Bipolartransistors 1 den Strom der Stromquelle 2 erst bei einer Temperatur, die niedriger ist als diejenige, bei der der Sperrstrom den Strom der Stromquelle beim Erhöhen der Temperatur übersteigt. Die Größe der Hysterese läßt sich durch die Dimensionierung des Spannungsteilers einstellen.

Die Schaltungsanordnung nach FIG 2 unterscheidet sich von der nach FIG 1 hauptsächlich dadurch, daß der Widerstand des n-Kanal-Depletion-FET 5 durch Einstellung seiner Substratvorspannung bestimmt wird. In diesem Fall ist sein Gate mit der Source elektrisch verbunden. Der Substratanschluß ist mit dem Knoten 14 des Spannungsteilers 6 verbunden. Die Funktionsweise entspricht der nach FIG 1. Der Widerstand wird hier jedoch durch eine an den pn-Übergang zwischen Substrat und Kanal angelegte Spannung gesteuert und nicht über die Isolierschicht des Gates. Damit ist eine Steuerung in einem weiteren Spannungsbereich möglich als über die Gatesteuerung.

Der Spannungsteiler 6 kann, wie in FIG 2 dargestellt, aus einem n-Kanal-Depletion-FET 12 und einer Diode 13 bestehen. Dieser Spannungsteiler kann selbstverständlich auch im Ausführungsbeispiel nach FIG 1 eingesetzt werden. Die Spannung am Knoten 14 wird im Ausführungsbeispiel nach FIG 2 bei Verwendung des Depletion-FET und der Diode der Ausgangsspannung an den Klemmen 3 und 4 folgen, während sie im Ausführungsbeispiel nach FIG 1 der Ausgangsspannung direkt proportional ist. Auch im Ausführungsbeispiel nach FIG 2 bildet der Depletion-FET einen hohen Widerstand bei Normaltemperatur und einen vergleichsweise niedrigen Widerstand bei Übertemperatur.

Zum Dämpfen von Überspannungsspitzen kann zwischen dem Substratanschluß des FET 5 und dem Basisanschluß des Bipolartransistors 1 und zwischen Basisanschluß des Bipolartransistors und Masse ein Kondensator 15 bzw. 17 eingeschaltet werden. Überspannungen zwischen Basisanschluß des Bipolartransistors 1 und Masse lassen sich durch eine Zenerdiode 16 abschneiden.

Die Stromquellen 2 und 12 sind in bekannter Weise aus Depletion-FET gebildet, deren Substratanschluß elektrisch mit dem Sourceanschluß verbunden ist.

**Patentansprüche**

1. Schaltungsanordnung zum Signalisieren der Übertemperatur eines elektronischen Bauelementes, mit einem mit dem Bauelement in thermischem Kontakt stehenden Bipolartransistor (1), dem emitterseitig eine Stromquelle (2) in Reihe geschaltet ist, mit einer mit dem Knoten (9) zwischen Stromquelle und Emitter des Bipolartransistors verbundenen Ausgangsklemme (3), an der eine erste Ausgangsspannung Normaltemperatur und eine zweite Ausgangsspannung Übertemperatur signalisiert, **gekennzeichnet durch** einen zwischen Basis und Emitter liegenden einstellbaren Widerstand, dessen Widerstandswert von der Ausgangsspannung gesteuert wird derart, daß er bei der ersten Ausgangsspannung einen ersten vorgegebenen Wert und bei der zweiten Ausgangsspannung einen zweiten, höheren Wert hat.

2. Schaltungsanordnung nach Anspruch 1, **dadurch gekennzeichnet,** daß der einstellbare Widerstand ein Depletion-FET (5) ist, der von einer der Ausgangsspannung folgenden Gate-Sourcespannung gesteuert wird.

3. Schaltungsanordnung nach Anspruch 1, **dadurch gekennzeichnet,** daß der einstellbare Widerstand ein Depletion-FET (5) ist, dessen Gateanschuß mit seinem Sourceanschluß verbunden ist und an dessen Substrat eine der Ausgangsspannung folgende Spannung angelegt ist.

4. Schaltungsanordung nach Anspruch 2 oder 3, **dadurch gekennzeichnet,** daß zur Erzeugung der genannten Spannung ein Spannungsteiler (6) vorgesehen ist.

5. Schaltungsanordnung nach Anspruch 4, **dadurch gekennzeichnet,** daß der Spannungsteiler aus einer Stromquelle (12) und einer Diode (13) besteht.

# FIG 1

# FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 240 807 (SIEMENS)<br>* Insgesamt * | 1 | G 01 K 3/00<br>G 01 K 7/00 |
| Y | FR-A-2 627 027 (S.G.S. THOMSON)<br>* Insgesamt * | 1,4 | |
| A | | 2 | |
| Y | US-A-4 623 798 (DIESEL KIKI)<br>* Insgesamt * | 1,4 | |
| A | JP-A-62 113 460 (MATSUSHITA)<br>* Zusammenfassung *<br>& PATENT ABSTRACTS OF JAPAN, Band 011, Nr. 325 (E-551) 22-10-17 | 1 | |
| A | JP-A-1 200 808 (MITSUBISHI)<br>* Zusammenfassung *<br>& PATENT ABSTRACTS OF JAPAN, Band 013, Nr. 503 (E-844) 13-11-89 | 1 | |
| A | JP-A-51 126 187 (FUJITSU)<br>* Zusammenfassung *<br>& PATENT ABSTRACTS OF JAPAN, Band 1, Nr. 32 (E-009) 29-03-1977 | 1 | **RECHERCHIERTE SACHGEBIETE (Int. Cl.5)**<br><br>G 01 K 3<br>G 01 K 7 |
| A | DE-A-1 948 517 (Dr. SIEBERT & KUHN)<br>* Seiten 9-11; Figuren 3,4 * | 1,4 | |
| A | JP-A-62 171 217 (SEIKO)<br>* Zusammenfassung *<br>& PATENT ABSTRACTS OF JAPAN, Band 12, Nr. 009 (E-572) 12-01-1988 | 1 | |

Der vorliegende Recherchenbericht wurde für alle Patentansprüche erstellt

| Recherchenort | Abschlußdatum der Recherche | Prüfer |
|---|---|---|
| Den Haag | 14 Juni 91 | RAMBOER P. |